# EUROPÄISCHE PATENTANMELDUNG

(11) **EP 4 696 917 A1**
(43) Veröffentlichungstag der Anmeldung: **18.02.2026**
(21) Anmeldenummer: 25194168.8
(22) Anmeldetag: 05.08.2025
(51) Int. Cl.: F16L 11/22, F16L 11/12, B29C 65/00, B29D 23/00

(54) **VERFAHREN ZUR FLÜSSIGKEITSDICHTEN KONNEKTIERUNG**

(30) Priorität: 16.08.2024 DE 102024123469
(71) Anmelder: Silnova GmbH, 95111 Rehau (DE)
(72) Erfinder: Radtke, Marius, 95448 Bayreuth (DE)

(57) **Zusammenfassung**

Die Erfindung betrifft ein Verfahren zur flüssigkeitsdichten Konnektierung eines aus Polymermaterial extrudierten Multilumen-Fluidleitungsbündels (1) mit mindestens einem Anschlusselement (20), wobei das Multilumen-Fluidleitungsbündel (1) aus mindestens zwei parallel nebeneinander angeordneten Einzel-Fluidleitungen (2, 3, 4) besteht, die im Wege ihrer Extrusion in Fluidleitungsrichtung (x) gleichsam stegförmig miteinander verbunden wurden. Mindestens eine als Abreiß-Verbindung (10) ausgebildete stegförmige Verbindung der Einzel-Fluidleitungen (2, 3, 4) wird lediglich an mindestens einem Ende des Multilumen-Fluidleitungsbündels (1) durch einen Abreißvorgang zerstört, so dass mindestens eine, endseitig vereinzelte Einzel-Fluidleitung (2) für die Konnektierung des entsprechenden Anschlusselementes (20) zugänglich ist.

## Beschreibung

Die Erfindung betrifft ein Verfahren zur flüssigkeitsdichten Konnektierung. Beispielsweise in Kaffee-Vollautomaten werden mehrere Fluidleitungen verbaut und hierbei mit entsprechenden Komponenten des Vollautomaten konnektiert. Die Fluidleitungen dienen z.B. zum Transport von frisch aufgebrühtem Wasser für die Kaffeezubereitung. Im Stand der Technik werden hierzu in der Regel entsprechend viele Einzelleitungen verbaut. Dies ist montagetechnisch vergleichsweise aufwändig.

Vor diesem Hintergrund liegt der Erfindung die Aufgabe zugrunde, ein vereinfachtes Verfahren zur flüssigkeitsdichten Konnektierung anzugeben, welches der eingangs beschriebenen Problematik Rechnung trägt.

Erfindungsgemäß wird diese Aufgabe gelöst durch ein Verfahren zur flüssigkeitsdichten Konnektierung eines aus Polymermaterial extrudierten Multilumen-Fluidleitungsbündels mit mindestens einem Anschlusselement,
- wobei das Multilumen-Fluidleitungsbündel aus mindestens zwei parallel nebeneinander angeordneten Einzel-Fluidleitungen besteht, die im Wege ihrer Extrusion in Fluidleitungsrichtung gleichsam stegförmig miteinander verbunden wurden,
- wobei mindestens eine als Abreiß-Verbindung ausgebildete stegförmige Verbindung der Einzel-Fluidleitungen lediglich an mindestens einem Ende des Multilumen-Fluidleitungsbündels durch einen Abreißvorgang zerstört wird,
- so dass mindestens eine, endseitig vereinzelte Einzel-Fluidleitung für die Konnektierung des entsprechenden Anschlusselementes zugänglich ist.

Im Rahmen der Erfindung wurde erkannt, dass durch die Verwendung eines Multilumen-Fluidleitungsbündels der Montageaufwand gegenüber der Konnektierung mehrerer Einzelschläuche deutlich reduziert werden kann. Um hierbei endseitig eine problemlose Konnektierung eines einzelnen Schlauches aus dem Multilumen-Fluidleitungsbündel zu gewährleisten, wird erfindungsgemäß die mindestens eine stegförmige Verbindung der entsprechenden Einzel-Fluidleitung zu der mindestens einen weiteren Einzel-Fluidleitung des Multilumen-Fluidleitungsbündel endseitig zerstört. Hierdurch wird die zur Konnektierung vorgesehene Einzel-Fluidleitung entsprechend endseitig vereinzelt und ist damit frei für die Verbindung mit einem Anschlusselement, beispielsweise einem Fitting, einer Anschlussverschraubung etc., zugänglich. Erfindungsgemäß erfolgt die Zerstörung lediglich endseitig, so dass der Verbund des Multilumen-Fluidleitungsbündels grundsätzlich erhalten bleibt. Damit wird erfindungsgemäß vermieden, dass beispielsweise in einem Kaffee-Vollautomaten mehrere Einzel-Fluidleitungen vergleichsweise ungeordnet innerhalb des entsprechenden Gehäuses verlaufen und ggf. sogar separat gesichert werden müssen.

Vorzugsweise beträgt die Stegbreite der Abreiß-Verbindung im Leitungsquerschnitt gesehen 0,3 bis 0,7 mm, vorzugsweise 0,35 bis 0,6 mm. Dies erlaubt es einerseits, dass der entsprechende Verbindungssteg von einer Montageperson, alternativ auch automatisiert, mühelos abgerissen werden kann. Andererseits ist die Stegbreite so groß, dass ein unbeabsichtigtes Weiterreißen, beispielsweise auch nach längerer Betriebsdauer, sicher verhindert wird.

Im Rahmen der Erfindung liegt es insbesondere, dass das Multilumen-Fluidleitungsbündel aus einem Elastomer, insbesondere aus einem Silikon-Material hergestellt wird. Die Shore Härte A des Fluidleitungsmaterials beträgt zweckmäßigerweise 45 bis 80, vorzugsweise 50 bis 75. Die Shore Härte A kann z.B. mittels den in Fachkreisen wohlbekannten DIN ISO 48-4 oder der DIN ISO 868 ermittelt werden. Vorzugsweise erfolgt die Herstellung des Fluidleitungsmaterials mittels Additionsvernetzung (z.B. einem Platin-Katalysator-Verfahrens) oder Peroxid-Vernetzung (chlorhaltig oder auch chlorfrei). Ferner liegt es im Rahmen der Erfindung, dass das Material des Multilumen-Fluidleitungsbündel talkumiert ausgebildet ist.

Die endseitige Abreißlänge kann maximal 20 cm, vorzugsweise maximal 10 cm, z.B. maximal 5 cm betragen. Andererseits beträgt diese zweckmäßigerweise mindestens 1 cm, z.B. mindestens 2 cm. Insgesamt ist daher einerseits eine ausreichend gute Zugänglichkeit des Endes der entsprechenden Einzel-Fluidleitung für die vorgesehene Konnektierung gegeben und andererseits weiterhin grundsätzlich ein guter Verbund des Multilumen-Fluidleitungsbündels außerhalb dessen Endbereiches.

Gemäß einer bevorzugten Ausführungsform der Erfindung weist das Multilumen-Fluidleitungsbündel mindestens drei Einzel-Fluidleitungen auf, aus deren Verbund vorzugsweise lediglich eine Einzel-Fluidleitung endseitig abgetrennt wird. Ferner liegt es im Rahmen der Erfindung, dass zur Vereinzelung des mindestens einen Einzel-Fluidleitungsendes mindestens zwei Verbindungsstege zu unterschiedlichen benachbarten Einzel-Fluidleitungen endseitig abgetrennt werden. Die endseitig zu vereinzelnde Einzel-Fluidleitung ist in diesem Fall entsprechend über mehrere Verbindungsstege an den Gesamtverbund des Multilumen-Fluidleitungsbündels angebunden. Dies gewährleistet grundsätzlich einen guten Verbund im Bündel, was beispielsweise wiederum außerhalb des vereinzelten Endbereiches im Dauer-Betriebsverhalten von Bedeutung ist.

Zweckmäßigerweise sind zwei nicht für eine endseitige Vereinzelung vorgesehene Einzel-Fluidleitungen durch einen mindestens 0,75 mm, z.B. 1 mm, vorzugsweise mindestens 1,5 mm breiten Dauerverbindungssteg miteinander verbunden. Dies verhindert sicher ein unbeabsichtigtes Einreißen der Dauerverbindungsstege.

Um einerseits ein leichtes Einreißen der Abreiß-Verbindung zu gewährleisten und andererseits ein ungewolltes Weiterreißen sowie auch ein Einreißen einer Leitungswandung mit einhergehendem Eintritt einer Leckage zu verhindern, sind auch die Radien am stegförmigen Übergang zwischen zwei Leitungen im Querschnitt gesehen von Bedeutung. Im Rahmen der Erfindung hat sich gezeigt, dass hier ein Übergangsradius von mindestens R = 0,1 mm von Vorteil ist. Zweckmäßig ist in diesem Zusammenhang auch ein maximaler Radius von R = 0,15 mm.

Das vorbeschriebene Verfahren kann insbesondere als Montageschritt bei der Montage eines Kaffee-Vollautomaten zum Einsatz kommen. Gegenstand der Erfindung ist auch ein Multilumen-Fluidleitungsbündel zur Durchführung des vorbeschriebenen erfindungsgemäßen Verfahrens.

Das Anschlusselement zur Konnektierung kann grundsätzlich von einer Beschaffenheit sein, wie sie im Stand der Technik bereits etabliert und üblich ist. So kann das Anschlusselement z.B. eine Fittingverbindung sowie alternativ auch eine gängige Schraubverbindung sein, bei der bspw. ein Überwurfelement auf einen mit einem Fluidleitungsende versehenen Anschlussstutzen aufgeschraubt wird. Weitere Anschlusskonstruktionen sind selbstverständlich ebenso möglich.

Im Folgenden wird die Erfindung anhand einer lediglich ein Ausführungsbeispiel darstellenden Zeichnung erläutert. Es zeigen schematisch:
- Fig. 1: ein Multilumen-Fluidleitungsbündel zur Durchführung eines erfindungsgemäßen Verfahrens in einer Querschnittsdarstellung,
- Fig. 2a: die Draufsicht X in Fig. 1, welche ein Ende des Multilumen-Fluidleitungsbündels zeigt,
- Fig. 2b: die Darstellung gemäß Fig. 2a nach endseitiger Vereinzelung einer Einzel-Fluidleitung des Multilumen-Fluidleitungsbündels und
- Fig. 2c: die Darstellung gemäß Fig. 2b nach Anschluss eines Anschlusselementes an die endseitig vereinzelte Einzel-Fluidleitung

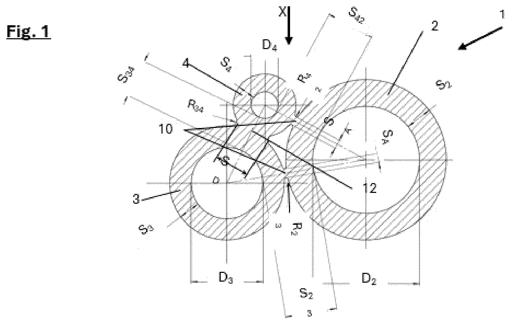

Fig. 1 zeigt ein zur Durchführung eines erfindungsgemäßen Verfahren geeignetes, aus Polymermaterial extrudiertes Multilumen-Fluidleitungsbündels 1 im Querschnitt. Das Multilumen-Fluidleitungsbündel 1 besteht aus drei parallel nebeneinander angeordneten Einzel-Fluidleitungen 2, 3, 4, die im Wege ihrer Extrusion in Fluidleitungsrichtung x gleichsam stegförmig miteinander verbunden wurden. Die stegförmigen Verbindungen 10, 12 zwischen den Einzel-Fluidleitungen 2, 3, 4 sind zum Teil als Abreiß-Verbindungen 10 ausgebildet. Die Stegbreite S_{A} der beiden dargestellten Abreiß-Verbindungen 10 beträgt im Leitungsquerschnitt gesehen 0,45 bis 0,55 mm. Das Multilumen-Fluidleitungsbündel 1 wurde aus einem Silikon-Material hergestellt und die Shore Härte A des Fluidleitungsmaterials beträgt 55 bis 65. Die Herstellung des Fluidleitungsmaterials erfolgte mittels Additionsvernetzung (z.B. Platin-Katalysator-Verfahren) oder alternativ auch mit Peroxid-Vernetzung (chlorhaltig /oder chlorfrei) erfolgt. Neben den Abreiß-Verbindungen 10 befindet sich zwischen den nicht für eine endseitige Vereinzelung vorgesehenen Einzel-Fluidleitungen 3, 4 ein mindestens S_{D} = 1,5 mm breiter Dauerverbindungssteg 12. Im Ausführungsbeispiel betragen die Durchmesser D₂, D₃ und D₄ der freien Strömungsquerschnitte der Einzel-Fluidleitungen D₂,= 5,7 - 6,3 mm, D₃ = 3,75 - 4,25 mm, D₄ = 1,35 - 1,75 mm und die entsprechenden Wanddicken S₂, S₃ und S₄ betragen S₂ = 1,3 - 1,7 mm, S₃ = 1,05 - 1,45 mm und S₄ = 0,8 - 1,2 mm. Die Materialbreiten im Bereich der stegförmigen Verbindungen 10, 12 betragen zwischen den Einzel-Fluidleitungen 2 und 3 S₂₃ = 2,8 - 3 mm, zwischen den Einzel-Fluidleitungen 3 und 4 S₃₄ = 2 - 2,2 mm und zwischen den Einzel-Fluidleitungen 4 und 2 S₄₂ = 2,6 - 2,8 mm.

Der Übergangsradius zwischen zwei Einzel-Fluidleitungen 2, 3, 4 beträgt bei den Abreiß-Verbindungen 10 R₂₃ = 0,1 - 0,15 mm bzw. R₄₂ = 0,1 - 0,15 mm, während dieser Übergangsradius beim Dauerverbindungssteg 12 mit R₃₄ = 0,25 - 0,35 mm größer bemessen ist.

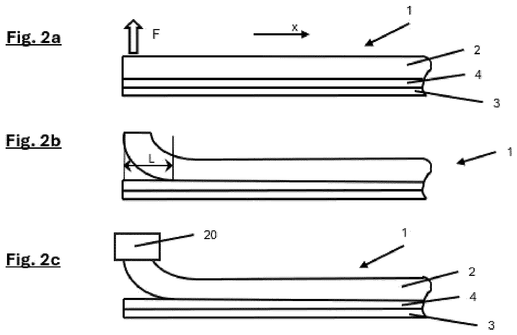

Das erfindungsgemäße Verfahren zur flüssigkeitsdichten Konnektierung des in Fig. 1 gezeigten, aus Polymermaterial extrudierten Multilumen-Fluidleitungsbündels 1 mit einem Anschlusselement 20 ist in den Fig. 2a bis 2c dargestellt. Zum Zwecke dieser Konnektierung wird die Einzel-Fluidleitung 2, welche lediglich über die beiden Abreiß-Verbindungen 10 mit den beiden anderen Einzel-Fluidleitungen 3, 4 verbunden ist (s. Fig. 1), endseitig vereinzelt. Zur Herstellung dieser Vereinzelung werden die beiden als Abreiß-Verbindungen 10 ausgebildeten stegförmigen Verbindungen zwischen den Einzel-Fluidleitungen 2 und 3 bzw. 2 und 4 lediglich an einem Ende des Multilumen-Fluidleitungsbündels 1 durch einen, beispielsweise manuellen, oder aber auch automatisierten Abreißvorgang (dargestellt durch den in Fig. 2a dargestellten Pfeil F) zerstört, so dass die nunmehr endseitig vereinzelte Einzel-Fluidleitung 2 für die Konnektierung des entsprechenden Anschlusselementes 20 (s. Fig. 2c) problemlos zugänglich ist. Die endseitige Abreißlänge L beträgt im Ausführungsbeispiel maximal 20 cm, mindestens jedoch 2 cm. Die beiden Einzel-Fluidleitungen 3, 4 bleiben hingegen über ihren gemeinsamen Dauerverbindungssteg 12 dauerhaft auch endseitig miteinander verbunden (s. Fig. 1 iVm Fig. 2c).

Das in den Figuren gezeigte Multilumen-Fluidleitungsbündel 1 kann beispielsweise zum Fluidtransport in einem (nicht dargestellten) Kaffee-Vollautomaten dienen, wobei das Anschlusselement 20 beispielsweise zur Verbindung der Einzel-Fluidleitung 2 mit einem, bspw. beheizbaren, Behälter oder einer weiteren Fluidleitung etc. des Kaffee-Vollautomaten dient. Hierdurch werden jedoch andere Anwendungen selbstverständlich nicht ausgeschlossen.

## Patentansprüche

1. Verfahren zur flüssigkeitsdichten Konnektierung eines aus Polymermaterial extrudierten Multilumen-Fluidleitungsbündels (1) mit mindestens einem Anschlusselement (20),
- wobei das Multilumen-Fluidleitungsbündel (1) aus mindestens zwei parallel nebeneinander angeordneten Einzel-Fluidleitungen (2, 3, 4) besteht, die im Wege ihrer Extrusion in Fluidleitungsrichtung (x) gleichsam stegförmig miteinander verbunden wurden,
- wobei mindestens eine als Abreiß-Verbindung (10) ausgebildete stegförmige Verbindung der Einzel-Fluidleitungen (2, 3, 4) lediglich an mindestens einem Ende des Multilumen-Fluidleitungsbündels (1) durch einen Abreißvorgang zerstört wird,
- so dass mindestens eine, endseitig vereinzelte Einzel-Fluidleitung (2) für die Konnektierung des entsprechenden Anschlusselementes (20) zugänglich ist.

2. Verfahren nach Anspruch 1, **dadurch gekennzeichnet, dass** die Stegbreite (s) der Abreiß-Verbindung im Leitungsquerschnitt gesehen 0,3 bis 0,7 mm, vorzugsweise 0,35 bis 0,6 mm, beträgt.

3. Verfahren nach Anspruch 1 oder 2, **dadurch gekennzeichnet, dass** das Multilumen-Fluidleitungsbündel (1) aus einem Elastomer, insbesondere aus einem Silikon-Material hergestellt wird.

4. Verfahren nach Anspruch 3, **dadurch gekennzeichnet, dass** die Shore Härte A des Fluidleitungsmaterials 45 bis 80, vorzugsweise 50 bis 75, beträgt.

5. Verfahren nach Anspruch 3 oder 4, **dadurch gekennzeichnet, dass** die Herstellung des Fluidleitungsmaterials mittels Additionsvernetzung (Platin-Katalysator-Verfahrens) oder Peroxid-Vernetzung (chlorhaltig oder chlorfrei) erfolgt.

6. Verfahren nach einem der Ansprüche 1 bis 5, **dadurch gekennzeichnet, dass** die endseitige Abreißlänge (L) maximal 20 cm, vorzugsweise maximal 10 cm, z.B. maximal 5 cm beträgt.

7. Verfahren nach einem der Ansprüche 1 bis 6, **dadurch gekennzeichnet, dass** das Multilumen-Fluidleitungsbündel (1) mindestens drei Einzel-Fluidleitungen (2, 3, 4) aufweist, aus deren Verbund vorzugsweise lediglich eine Einzel-Fluidleitung (2) endseitig abgetrennt wird.

8. Verfahren nach Anspruch 7, **dadurch gekennzeichnet, dass** zur Vereinzelung des mindestens einen Endes der Einzel-Fluidleitung (2) mindestens zwei Verbindungsstege (10) zu unterschiedlichen benachbarten Einzel-Fluidleitungen (3, 4) endseitig abgetrennt werden.

9. Verfahren nach Anspruch 7 oder 8, **dadurch gekennzeichnet, dass** zwei nicht für eine endseitige Vereinzelung vorgesehene Einzel-Fluidleitungen (3, 4) durch einen mindestens 0,75 mm, z.B. 1 mm, vorzugsweise mindestens 1,5 mm breiten Dauerverbindungssteg (12) miteinander verbunden sind.

10. Verwendung des Verfahrens nach einem der Ansprüche 1 bis 9 bei der Montage eines Kaffee-Vollautomaten.

11. Multilumen-Fluidleitungsbündel (1) zur Durchführung des Verfahrens nach einem der Ansprüche 1 bis 9.
